# EUROPEAN PATENT SPECIFICATION

(11) **EP 4 131 855 B1**
(45) Date of publication and mention of the grant of the patent: **25.06.2025**
(21) Application number: 21793650.9
(22) Date of filing: 10.03.2021
(51) Int. Cl.: H04L 12/46

(54) **PACKET PROCESSING METHOD AND DEVICE BASED ON IN-SITU FLOW DETECTION**
PAKETVERARBEITUNGSVERFAHREN UND -VORRICHTUNG AUF DER BASIS VON IN-SITU-FLUSSDETEKTION
PROCÉDÉ ET DISPOSITIF DE TRAITEMENT DE PAQUETS SUR LA BASE D'UNE DÉTECTION DE FLUX IN SITU

(30) Priority: 24.04.2020 CN 202010332211
(43) Date of publication of application: 08.02.2023
(73) Proprietor: Huawei Technologies Co., Ltd., Shenzhen, Guangdong 518129 (CN)
(72) Inventor: CHU, Bosen, Shenzhen, Guangdong 518129 (CN)
(74) Representative: Körber, Martin Hans
(86) International application number: PCT/CN2021/079921
(87) International publication number: WO 2021/213045

(56) References cited:
- WO-A1-2008/070958
- WO-A1-2013/025534
- CN-A- 108 737 269
- CN-A- 109 743 340
- US-A1- 2012 140 633
- US-A1- 2018 331 933
- US-A1- 2020 084 143

## Description

### TECHNICAL FIELD

This application relates to the communication field, and in particular, to an in-situ flow detection-based packet processing method and an apparatus.

### BACKGROUND

In a data communication network, an in-situ flow detection technology may be used for performance detection of the data communication network, for example, delay and packet loss detection of the data communication network. The in-situ flow detection technology may be, for example, an in-situ flow information telemetry (in-situ flow information telemetry, iFIT) technology or an in-band operation administration and maintenance (in-band operation administration and maintenance, iOAM) technology.

In a network, a detection domain may be specified to determine a network range in which in-situ flow detection needs to be performed. A node in the detection domain needs to transmit in-situ flow detection information for in-situ flow detection. Currently, if a plurality of bearer protocols are deployed in the detection domain, the in-situ flow detection technology cannot be used for performance detection of the detection domain. Therefore, a solution is required to resolve the foregoing problem.

WO 2013/025534 A1 discloses systems and methods are disclosed for providing differentiated quality of service (QoS) to packets of different type.

### SUMMARY

Embodiments of this application provide an in-situ flow detection-based packet processing method and an apparatus, so that an in-situ flow detection technology can still be used for performance detection in the case of a plurality of bearer protocols deployed in a detection domain. The invention is defined in the independent claims. Additional features of the invention are provided in the dependent claims. In the following, parts of the description and drawings referring to embodiments which are not covered by the claims are not presented as embodiments of the invention, but as examples useful for understanding the invention.

According to a first aspect, an embodiment of this application provides an in-situ flow detection-based packet processing method. Currently, for a detection domain in which a plurality of bearer protocols are deployed, an in-situ flow detection technology cannot be used for performance detection. This is because different bearer protocols correspond to different packet encapsulation formats. When a packet carrying in-situ flow detection information is transmitted in the detection domain in which the plurality of bearer protocols are deployed, once the packet needs to be re-encapsulated, the in-situ flow detection information carried in the packet is removed. Therefore, the in-situ flow detection information cannot be transmitted across the entire detection domain. As a result, the in-situ flow detection technology cannot be used for performance detection of the detection domain. In this embodiment of this application, after receiving a first packet from a second node, a first node in a detection domain may obtain a second packet based on the first packet. A first packet header of the first packet includes first in-situ flow detection information, and the first packet is a packet encapsulated by using a first bearer protocol. The first node may re-encapsulate the first packet by using a second bearer protocol. When re-encapsulating the first packet, the first node does not remove the first in-situ flow detection information, but adds the first in-situ flow detection information to the packet encapsulated by using the second bearer protocol, to obtain the second packet including the first in-situ flow detection information. After obtaining the second packet, the first node may forward the second packet to a third node, so that the second packet including the first in-situ flow detection information continues to be transmitted in the detection domain. It can be learned that in the solution in this embodiment of this application, even if the first bearer protocol and the second bearer protocol are deployed in the detection domain, the first in-situ flow detection information is not removed due to re-encapsulation of the packet, and may be transmitted across the entire detection domain. Therefore, even if the first bearer protocol and the second bearer protocol are deployed in the detection domain, an in-situ flow detection technology can still be used for performance detection of the detection domain.

In an implementation, the first bearer protocol is the IPv4 protocol, the IPv6 protocol, the MPLS protocol, the VLAN protocol, the GRE protocol, the NSH protocol, or the segment routing over internet protocol version 6 SRv6 protocol. The second bearer protocol is the IPv4 protocol, the IPv6 protocol, the MPLS protocol, the VLAN protocol, the GRE protocol, the NSH protocol, or the SRv6 protocol. The first bearer protocol is different from the second bearer protocol.

In an implementation, the first in-situ flow detection information indicates a performance parameter for detecting the detection domain, the detection domain includes a first domain and a second domain, the second node belongs to the first domain, the third node belongs to the second domain, and the first node is a node that crosses the first domain and the second domain. It can be learned that, in this embodiment of this application, when the first packet carrying the first in-situ flow detection information is transmitted across the first domain and the second domain, the first node serving as the node that crosses the first domain and the second domain may not remove the first in-situ flow detection information, so that the first in-situ flow detection information can be transmitted across the entire detection domain.

In an implementation, the first node is a service function proxy SF proxy, and the third node is a service function SF device.

In an implementation, when the first node is the SF proxy and the third node is the SF device, the first node may further receive a third packet returned by the third node, where the third packet includes the first in-situ flow detection information, and the third packet is a packet encapsulated by using the second bearer protocol. The first node generates a fourth packet based on the third packet, where the fourth packet includes the first in-situ flow detection information, and the fourth packet is a packet encapsulated by using the first bearer protocol. The first node sends the first packet to a next-hop node. In this scenario, the first packet may pass through the SF device in a transmission process, but the first in-situ flow detection information is not lost, so that the first in-situ flow detection information can continue to be transmitted to the next-hop node.

In an implementation, an SRv6 network is deployed in the first domain, an IPv4 network is deployed in the second domain, the first packet is an SRv6 packet carrying service function chain SFC information, and the second packet is an IPv4 packet carrying the SFC information. In this case, when the SRv6 network and the IPv4 network are deployed in the detection domain, the in-situ flow detection technology can still be used for performance detection of the detection domain.

In an implementation, an IPv4 network is deployed in the first domain, an SRv6 network is deployed in the second domain, the first packet is an IPv4 packet carrying SFC information, and the second packet is an SRv6 packet carrying the SFC information. In this case, when the SRv6 network and the IPv4 network are deployed in the detection domain, the in-situ flow detection technology can still be used for performance detection of the detection domain.

In an implementation, an MPLS network is deployed in the first domain, an IPv4 network is deployed in the second domain, the first packet is an MPLS packet, and the second packet is an IPv4 packet. In this case, when the MPLS network and the IPv4 network are deployed in the detection domain, the in-situ flow detection technology can still be used for performance detection of the detection domain.

In an implementation, a layer 3 virtual private network L3VPN is deployed in the first domain.

In an implementation, the detection domain further includes a third domain, the MPLS network is deployed in the third domain, and the third node is a node that crosses the second domain and the third domain. In this case, when the MPLS network and the IPv4 network are deployed in the detection domain, the in-situ flow detection technology can still be used for performance detection of the detection domain.

In an implementation, the L3VPN is deployed in the third domain.

In an implementation, the first domain is a first autonomous system AS, and the first node is an autonomous system boundary router ASBR of the first AS. The third domain is a second AS, and the third node is an ASBR of the second AS.

In an implementation, an IPv4 network is deployed in the first domain, an MPLS network is deployed in the second domain, the first packet is an IPv4 packet, and the second packet is an MPLS packet. In this case, when the MPLS network and the IPv4 network are deployed in the detection domain, the in-situ flow detection technology can still be used for performance detection of the detection domain.

In an implementation, an L3VPN is deployed in the second domain.

In an implementation, the first in-situ flow detection information includes iFIT in-situ flow detection information or iOAM in-situ flow detection information.

According to a second aspect, an embodiment of this application provides a first node. The first node includes a communication interface and a processor connected to the communication interface. The first node is configured to perform the method according to any one of the implementations of the first aspect through the communication interface and the processor.

According to a third aspect, an embodiment of this application provides a first node. The first node includes a memory and a processor. The memory is configured to store program code, and the processor is configured to run instructions in the program code, to enable the first node to perform the method according to any one of the implementations of the first aspect.

According to a fourth aspect, an embodiment of this application provides a computer-readable storage medium. The computer-readable storage medium stores instructions. When the instructions are run on a computer, the computer is enabled to perform the method according to any one of the implementations of the first aspect.

### BRIEF DESCRIPTION OF DRAWINGS

To describe technical solutions in embodiments of this application or a conventional technology more clearly, the following briefly describes the accompanying drawings for describing embodiments or the conventional technology. It is clear that the accompanying drawings in the following descriptions show some embodiments of this application, and a person of ordinary skill in the art may still derive other drawings from these accompanying drawings without creative efforts.
FIG. 1 is a schematic diagram of a network architecture according to an embodiment of this application;
FIG. 2 is a schematic diagram of an example application scenario according to an embodiment of this application;
FIG. 3 is a schematic diagram of another example application scenario according to an embodiment of this application;
FIG. 4 is a signaling interworking diagram of an in-situ flow detection-based packet processing method according to an embodiment of this application;
FIG. 5a is a schematic diagram of a structure of a possible SRv6 packet according to an embodiment of this application;
FIG. 5b is a schematic diagram of a structure of another possible SRv6 packet according to an embodiment of this application;
FIG. 5c is a schematic diagram of a structure of still another possible SRv6 packet according to an embodiment of this application;
FIG. 6a is a schematic diagram of a structure of a possible IPv4 packet according to an embodiment of this application;
FIG. 6b is a schematic diagram of a structure of another possible IPv4 packet according to an embodiment of this application;
FIG. 6c is a schematic diagram of a structure of still another possible IPv4 packet according to an embodiment of this application;
FIG. 7 is a signaling interworking diagram of an in-situ flow detection-based packet processing method according to an embodiment of this application;
FIG. 8a is a schematic diagram of a structure of a possible MPLS packet according to an embodiment of this application;
FIG. 8b is a schematic diagram of a structure of iFIT in-situ flow detection information according to an embodiment of this application;
FIG. 8c is a schematic diagram of a structure of iOAM in-situ flow detection information according to an embodiment of this application;
FIG. 9 is a schematic flowchart of an in-situ flow detection-based packet processing method according to an embodiment of this application;
FIG. 10 is a schematic diagram of a structure of a first node according to an embodiment of this application;
FIG. 11 is a schematic diagram of a structure of a first node according to an embodiment of this application; and
FIG. 12 is a schematic diagram of a structure of a first node according to an embodiment of this application.

### DESCRIPTION OF EMBODIMENTS

Embodiments of this application provide an in-situ flow detection-based packet processing method, so that an in-situ flow detection technology can still be used for performance detection in the case of a plurality of bearer protocols deployed in a detection domain.

For ease of understanding, the in-situ flow detection technology is briefly described first.

The in-situ flow detection technology may perform feature marking on a service flow in a network by using in-situ flow detection information carried in a packet, where feature marking may also be referred to as coloring. A node through which the service flow passes reports, to a control management device, collected data such as a timestamp and a quantity of packets, so that the control management device further calculates a network delay and a packet loss status based on the reported data.

In a network, a detection domain may be specified to determine a network range in which in-situ flow detection needs to be performed. Generally, a node in the detection domain needs to transmit in-situ flow detection information for in-situ flow detection, and sends, to the control management device, corresponding information obtained through the in-situ flow detection. A detection range of the detection domain may be determined in a plurality of manners, for example, based on network scenarios or service types. For example, a core network part in the network is specified as the detection domain, or detection domains of different ranges are specified for video services and voice services. The detection domain includes three types of nodes: a head node (English: head node), a tail node (English: end node), and a hop-by-hop path node (English: path node). The hop-by-hop path node may also be referred to as a transit node. The head node, the tail node, and the path node may be, for example, corresponding network nodes in the network. For a service flow, the 1^{st} network node that transmits the service flow within the specified detection range in the detection domain may be used as a head node that transmits the service flow. The last network node that transmits the service flow within the specified detection range in the detection domain may be used as a tail node that transmits the service flow. Each node that transmits the service flow between the head node and the tail node is a hop-by-hop path node. The in-situ flow detection information may be added by the head node and removed at the tail node.

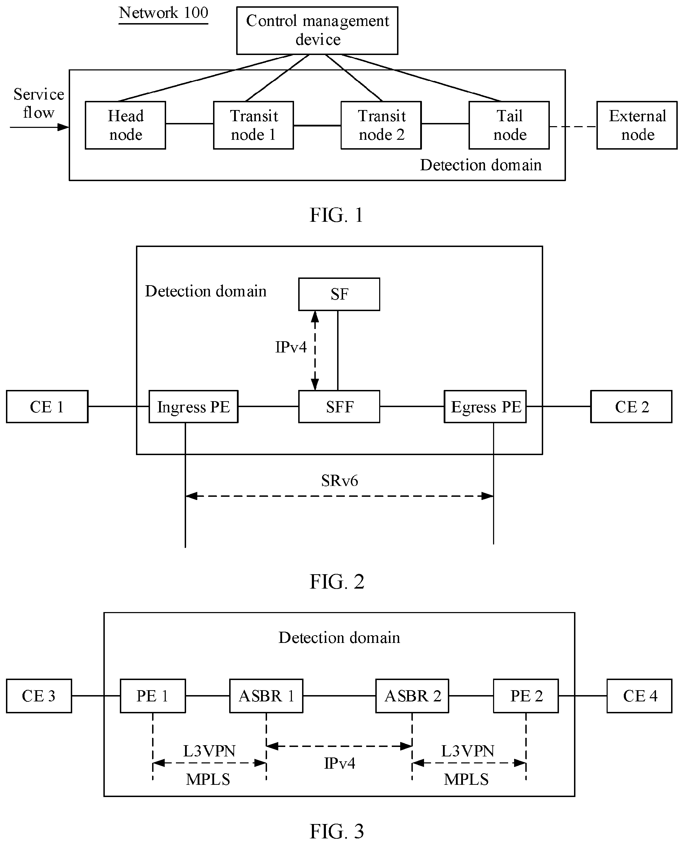

Next, a possible network architecture of in-situ flow detection is described. FIG. 1 is a schematic diagram of a network architecture according to an embodiment of this application. A network 100 includes a control management device and a plurality of network nodes. The plurality of network nodes are connected to each other through communication links, for transmission of service flows. As shown in FIG. 1, a head node, a transit node 1, a transit node 2, and a tail node in a detection domain are connected through communication links. In addition to the nodes shown in the figure, the detection domain may further include other nodes that are not shown. The tail node may be further connected to an external node through a communication link. The head node may receive a service flow from another device, and the service flow may reach the external node through the head node, the transit node 1, the transit node 2, and the tail node. The control management device may be, for example, a centralized controller, a network management system, or a traffic analysis device for traffic analysis. The control management device may be one device, or may be a set of a plurality of devices. The control management device may be a functional module integrated into a specific physical device, or may be a physical device configured to implement a function implemented by the control management device in this application.

In this application, the detection domain may be determined by the control management device, and the detection domain is a detection range determined by the control management device. Alternatively, the detection domain may be separately configured on each forwarding device in the detection domain, to form one detection domain. On a transmission path in the detection domain, network nodes located between the head node and the tail node in the detection domain are transit nodes, for example, the transit node 1 and the transit node 2 in FIG. 1.

Currently, the control management device may deploy an in-situ flow detection technology on each node in the detection domain, to detect a transmission delay and a packet loss in the detection domain.

The transmission delay in the detection domain may include an end-to-end transmission delay between the head node and the tail node. Each node in the detection domain may periodically perform a delay detection operation. Specifically, in one in-situ flow detection period, the head node may select a packet from received packets for coloring. The head node may add, to the packet, in-situ flow detection information indicating to detect the transmission delay, and report, to the control management device, a timestamp T1 indicating a time point at which the head node receives the packet. After receiving the packet, the tail node in the detection domain may forward the packet to the external node, and report, to the control management device, a timestamp T2 indicating a time point at which the tail node forwards the packet to the external node. The control management device may learn, through calculation based on the timestamp T1 reported by the head node and the timestamp T2 reported by the tail node, that the end-to-end transmission delay in the detection domain in the in-situ flow detection period is T2-T1. When selecting a packet for coloring, the head node may color the packet based on a feature of the packet, for example, color a packet including specified quintuple information. The quintuple information may include a source internet protocol (Internet Protocol, IP) address, a destination IP address, a protocol type, a source port number, and a destination port number.

During specific implementation of packet loss measurement in the detection domain, in one in-situ flow detection period, the head node may alternately color packets in a service flow according to a specific rule, and report information about the colored packets to the control management device. The tail node calculates information about a colored packet received in the in-situ flow detection period, and reports the information to the control management device. The control management device determines a packet loss status of a packet flow in the detection domain based on the information reported by the head node and the tail node. For example, the head node colors ten packets in one in-situ flow detection period, and reports a quantity (namely, 10) of colored packets to the control management device. The tail node receives only nine colored packets in the in-situ flow detection period, and the tail node reports a quantity (namely, 9) of received colored packets to the control management device. The control management device may determine, based on the quantities reported by the head node and the tail node, that a packet loss occurs in a process of transmitting the service flow in the detection domain.

Currently, the in-situ flow detection technology has some limitations. Specifically, only one bearer protocol can be deployed in the detection domain. If a plurality of bearer protocols are deployed in the detection domain, the in-situ flow detection technology cannot be used for performance detection, for example, the in-situ flow detection technology cannot be used for end-to-end performance detection. This is because different bearer protocols correspond to different packet encapsulation formats. When a packet carrying the in-situ flow detection information is transmitted in a detection domain in which a plurality of bearer protocols are deployed, the in-situ flow detection information carried in the packet is removed once the packet needs to be re-encapsulated. That is, the in-situ flow detection information cannot be transmitted across the entire detection domain. Correspondingly, a node that does not receive the in-situ flow detection information does not perform a corresponding in-situ flow detection operation.

Deploying a bearer protocol in the detection domain may also be considered as deploying a network that supports the bearer protocol in the detection domain. For example, that the segment routing over internet protocol version 6 (Segment Routing over Internet Protocol Version 6, SRv6) protocol is deployed in the detection domain indicates that an SRv6 network is deployed in the detection domain.

For ease of understanding, the following describes the limitations of the foregoing in-situ flow detection technology with reference to specific application scenarios. The limitations of the in-situ flow detection technology are not limited to the following two application scenarios. Correspondingly, the method provided in embodiments of this application is not limited to the following two application scenarios.

FIG. 2 is a schematic diagram of an example application scenario according to an embodiment of this application. FIG. 2 shows a service function chain (service function chain, SFC) scenario of the SRv6 protocol.

In the scenario shown in FIG. 2, an SRv6 network is deployed between an ingress (ingress) provider edge (provider edge, PE) device ingress PE and an egress (egress) PE device egress PE, and an internet protocol version 4 (Internet Protocol Version 4, IPv4) network is deployed between a service function forwarder (Service Function Forwarder, SFF) device SFF and a service function (service function, SF) device SF. A customer edge (customer edge, CE) device CE 1 sends an IPv4 packet to a customer edge device CE 2, and the packet passes through the SF device in a forwarding process.

In some scenarios, a network between the ingress PE and the egress PE may be specified as a detection domain, and an in-situ flow detection technology is used for performance detection of the detection domain. Next, limitations of the in-situ flow detection technology are described for a process of transmitting a packet in the detection domain.

Step 1: After receiving the IPv4 packet from the CE 1, the ingress PE re-encapsulates the IPv4 packet into an SRv6 packet, and encapsulates in-situ flow detection information into the SRv6 packet, to indicate a node that receives the in-situ flow detection information to perform an in-situ flow detection operation.

In this embodiment of this application, the SRv6 packet may carry related information of a service function chain, for example, a service function path (service function path, SFP) or data of the service function chain. Specifically, the related information of the SFC may be carried in an SFC header. For the SRv6 packet, the SFC header may be carried in a segment routing header (segment routing header, SRH).

In this embodiment of this application, the SRH of the SRv6 may include a SID-1. The SID-1 is a segment identifier (segment identifier, SID) of the service function device SF, that is, indicates that the SRv6 packet passes through the SF in a forwarding process. In the service function chain scenario, the SRv6 packet may be forwarded to the SF through the SFF. The SID-1 may further identify a service chain type. Specifically, the SID-1 may identify a dynamic service chain or a static service chain.

In some embodiments, if all service flows forwarded through the SF are forwarded through a same tunnel, the SID-1 identifies the static service chain. If not all service flows are forwarded through a same tunnel, for example, different service flows are forwarded through different tunnels, the SID-1 identifies the dynamic service chain.

Step 2: The ingress PE sends the encapsulated SRv6 packet to the SFF.

Step 3: The SFF re-encapsulates the received SRv6 packet to obtain the IPv4 packet, and sends the IPv4 packet to the SF.

When re-encapsulating the SRv6 packet, the SFF removes the in-situ flow detection information from the SRv6 packet. In other words, the IPv4 packet sent by the SFF to the SF does not include the in-situ flow detection information.

After receiving the SRv6 packet, the SFF may remove the SFC header from the SRv6 packet, re-encapsulate the SRv6 packet into the IPv4 packet, and send the IPv4 packet to the SF.

In this embodiment of this application, if the SID-1 identifies the dynamic service chain, the SFF may further locally buffer the SFC header, because different service flows may correspond to different SFC headers. If the SID-1 identifies the static service chain, the SFF does not need to buffer the SFC, because in this case, all service flows correspond to the same SFC header, and the SFC header may be configured in the SFF through static configuration.

Step 4: The SF performs corresponding processing based on the received IPv4 packet, and returns the IPv4 packet to the SFF after the processing.

The SF processes the IPv4 packet, for example, may perform security detection on the IPv4 packet, to determine whether the IPv4 packet is an attack packet.

Step 5: The SFF re-encapsulates the received IPv4 packet into the SRv6 packet, and sends the SRv6 packet to the egress PE, where the SRv6 packet sent by the SFF to the egress PE does not include the in-situ flow detection information.

When re-encapsulating the IPv4 packet into the SRv6 packet, the SFF needs to encapsulate the SFC header into the SRv6 packet. Therefore, the SFF can obtain the corresponding SFC header. Specifically, if the SID-1 identifies the dynamic service chain, the SFF buffers an SFC header corresponding to the IPv4 packet when performing step 3. Therefore, the SFF can obtain the SFC header buffered in step 3, and re-encapsulate the IPv4 packet into the SRv6 packet based on the SFC header. If the SID-1 identifies the static service chain, it indicates that all service packets use the same SFC header. In this case, the SFF may obtain the SFC header statically configured on the SFF, and re-encapsulate the IPv4 packet into the SRv6 packet based on the obtained SFC header.

Step 6: The egress PE re-encapsulates the received SRv6 packet into the IPv4 packet and sends the IPv4 packet to the CE 2.

In this embodiment of this application, the SRH of the SRv6 packet sent by the SFF to the egress PE may include an End.DT4 SID. The End.DT4 SID identifies a layer 3 virtual private network (layer 3 virtual private network, L3VPN). After receiving the SRv6 packet, the egress PE searches for a local VPN route based on the End.DT4 SID, to continue to forward the packet.

It can be learned from the foregoing descriptions that the in-situ flow detection information is not transmitted across the entire detection domain. This is because in step 3, when the SFF re-encapsulates the received SRv6 packet, the in-situ flow detection information is removed from the SRv6 packet. In other words, none of the nodes between the SFF and the egress PE receives the in-situ flow detection information. Therefore, a corresponding detection operation cannot be performed based on the in-situ flow detection information.

In the scenario shown in FIG. 2, an SF proxy (proxy) runs on the SFF, and the foregoing steps performed by the SFF may be specifically performed by the SF proxy.

It should be noted that FIG. 2 is merely shown for ease of understanding, and does not constitute a limitation on embodiments of this application. In some embodiments, alternatively, an IPv6 network, a virtual local area network (virtual local area network, VLAN), a multi-protocol label switching (Multi-protocol Label Switching, MPLS) network, a generic routing encapsulation (generic routing encapsulation, GRE) network, or a network service header (network service header, NSH) network may be deployed between the SFF and the SF. This is not specifically limited in embodiments of this application.

If the IPv6 network is deployed between the SFF and SF, in step 3, the SFF needs to re-encapsulate the SRv6 packet to obtain an IPv6 packet; in step 4, the packet received by the SFF is also the IPv6 packet; in step 5, the SFF re-encapsulates the received IPv6 packet into the SRv6 packet and sends the SRv6 packet to the egress PE.

If the VLAN is deployed between the SFF and SF, in step 3, the SFF needs to re-encapsulate the SRv6 packet to obtain a VLAN-encapsulated packet; in step 4, the packet received by the SFF is also the VLAN-encapsulated packet; in step 5, the SFF re-encapsulates the received VLAN-encapsulated packet into the SRv6 packet, and sends the SRv6 packet to the egress PE.

If the MPLS network is deployed between the SFF and SF, in step 3, the SFF needs to re-encapsulate the SRv6 packet to obtain an MPLS packet; in step 4, the packet received by the SFF is also the MPLS packet; in step 5, the SFF re-encapsulates the received MPLS packet into the SRv6 packet and sends the SRv6 packet to the egress PE.

If the GRE network is deployed between the SFF and SF, in step 3, the SFF needs to re-encapsulate the SRv6 packet to obtain a GRE packet; in step 4, the packet received by the SFF is also the GRE packet; in step 5, the SFF re-encapsulates the received GRE packet into the SRv6 packet and sends the SRv6 packet to the egress PE.

If the NSH network is deployed between the SFF and SF, in step 3, the SFF needs to re-encapsulate the SRv6 packet to obtain an NSH packet; in step 4, the packet received by the SFF is also the NSH packet; in step 5, the SFF re-encapsulates the received NSH packet into the SRv6 packet and sends the SRv6 packet to the egress PE.

FIG. 3 is a schematic diagram of another example application scenario according to an embodiment of this application. FIG. 3 is a schematic diagram of an inter-AS VPN scenario.

In the scenario shown in FIG. 3, when data is exchanged between a CE 3 and a CE 4, a VPN needs to be used. A PE 1 and an autonomous system boundary router (autonomous system boundary router, ASBR) ASBR 1 belong to an autonomous domain 100 (AS 100). The ASBR 1 is also a PE device in the AS 100. An L3VPN is deployed in the AS 100, and an MPLS network or an SR-MPLS network is deployed in the AS 100. A PE 2 and an ASBR 2 belong to an AS 200. The ASBR 2 is also a PE device in the AS 200. The L3VPN is deployed in the AS 200, and the MPLS network or the SR-MPLS network is deployed in the AS 200.

No MPLS network is deployed between the ASBR 1 and the ASBR 2, and an IPv4 network is deployed between the ASBR 1 and the ASBR 2. The ASBR 1 considers the ASBR 2 as a CE device connected to the ASBR 1, and the ASBR 2 also considers the ASBR 1 as a CE device connected to the ASBR 2. After creating a VPN instance, the ASBR 1 advertises IPv4 routes to the ASBR 2 via the external border gateway protocol (External Border Gateway Protocol, EBGP). Similarly, after creating the VPN instance, the ASBR 2 advertises the IPv4 routes to the ASBR 1 via the EBGP.

In some scenarios, a network between the PE 1 and the PE 2 may be specified as a detection domain, and an in-situ flow detection technology is used for performance detection of the detection domain. Next, limitations of the in-situ flow detection technology are described for a process of transmitting a packet in the detection domain.

Step 1: The CE 3 sends an IPv4 packet to the PE 1.

Step 2: After receiving the IPv4 packet from the PE 1, the PE 1 encapsulates the IPv4 packet into an MPLS packet, and encapsulates in-situ flow detection information into the MPLS packet, to indicate a node that receives the in-situ flow detection information to perform an in-situ flow detection operation.

In this embodiment of this application, the MPLS packet further carries a public network label and a private network label of the L3VPN.

Step 3: The PE 1 sends the MPLS packet to the ASBR 1.

Step 4: The ASBR 1 re-encapsulates the received MPLS packet into the IPv4 packet and sends the IPv4 packet to the ASBR 2.

When re-encapsulating the MPLS packet, the ASBR 1 removes the in-situ flow detection information from the MPLS packet. In other words, the IPv4 packet sent by the ASBR 1 to the ASBR 2 does not include the in-situ flow detection information.

Step 5: The ASBR 2 receives the IPv4 packet sent by the ASBR 1, and re-encapsulates the IPv4 packet to obtain the MPLS packet including the private network label and the public network label.

Step 6: The ASBR 2 sends the re-encapsulated MPLS packet to the PE 2, where the MPLS packet sent by the ASBR 2 to the PE 2 does not include the in-situ flow detection information.

Step 7: The PE 2 re-encapsulates the MPLS packet into the IPv4 packet and sends the IPv4 packet to the CE 4.

It can be learned from the foregoing descriptions that the in-situ flow detection information is not transmitted across the entire detection domain. This is because in step 4, when the ASBR 1 re-encapsulates the received MPLS packet, the in-situ flow detection information is removed from the MPLS packet. In other words, none of the nodes in the AS 200 receives the in-situ flow detection information. Therefore, a corresponding detection operation cannot be performed based on the in-situ flow detection information.

Based on the foregoing descriptions, it can be learned that, in actual application, there is a requirement of using the in-situ flow detection technology to detect performance of a detection domain in which a plurality of bearer protocols are deployed. However, the current in-situ flow detection technology cannot meet the requirement. In view of this, embodiments of this application provide an in-situ flow detection-based packet processing method, so that an in-situ flow detection technology can still be used for performance detection in the case of a plurality of bearer protocols deployed in a detection domain.

The following separately describes the packet processing method provided in embodiments of this application with reference to the application scenarios shown in FIG. 2 and FIG. 3.

The packet processing method provided in embodiments of this application is first described with reference to the application scenario shown in FIG. 2.

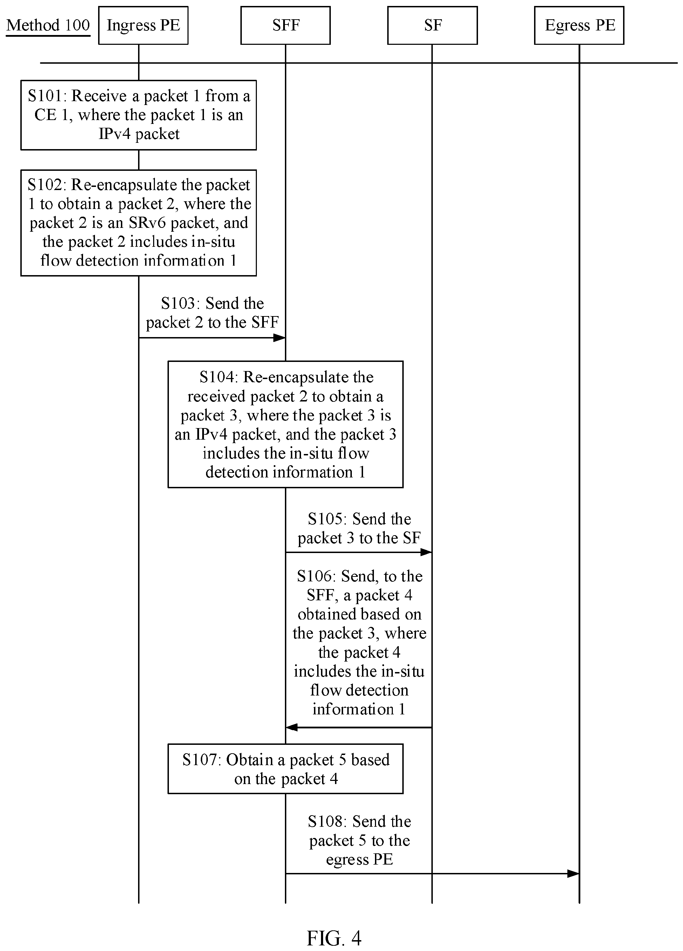

FIG. 4 is a signaling interworking diagram of an in-situ flow detection-based packet processing method according to an embodiment of this application. The method 100 shown in FIG. 4 may be, for example, implemented through the following S101 to S108.

S101: An ingress PE receives a packet 1 from a CE 1, where the packet 1 is an IPv4 packet.

In this embodiment of this application, the packet 1 is the IPv4 packet. In other words, the packet 1 is a packet encapsulated by using the IPv4 protocol.

S102: The ingress PE re-encapsulates the packet 1 to obtain a packet 2, where the packet 2 is an SRv6 packet, and the packet 2 includes in-situ flow detection information 1.

In this embodiment of this application, when re-encapsulating the packet 1, the ingress PE serving as a head node of a detection domain adds the in-situ flow detection information 1 to a packet header, to obtain the packet 2. The in-situ flow detection information 1 indicates a performance parameter for detecting the detection domain. The detection domain includes a network between the ingress PE and an egress PE. In this embodiment of this application, the in-situ flow detection information 1 may be iFIT in-situ flow detection information or iOAM in-situ flow detection information.

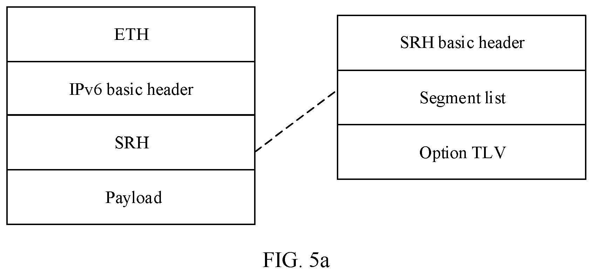

For a structure of the packet 2, refer to the following descriptions of FIG. 5a to FIG. 5c. Details are not described herein.

S103: The ingress PE sends the packet 2 to an SFF.

S104: The SFF re-encapsulates the received packet 2 to obtain a packet 3, where the packet 3 is an IPv4 packet, and the packet 3 includes the in-situ flow detection information 1.

The packet 3 is a packet encapsulated by using the IPv4 protocol. When re-encapsulating the packet 2 to obtain the packet 3, the SFF does not simply remove the in-situ flow detection information 1 from the packet 2, but encapsulates the in-situ flow detection information 1 obtained from the packet 2 into the packet 3. Specifically, when re-encapsulating the packet 2, the SFF may add the in-situ flow detection information 1 to a packet header, to obtain the packet 3 including the in-situ flow detection information 1.

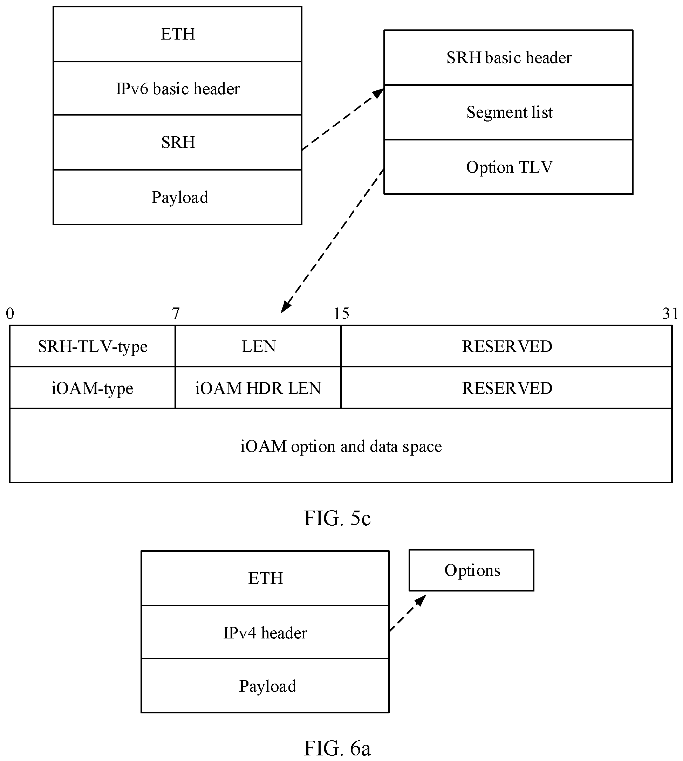

For a structure of the packet 3, refer to the following descriptions of FIG. 6a to FIG. 6c. Details are not described herein.

S105: The SFF sends the packet 3 to an SF.

S106: The SF sends, to the SFF, a packet 4 obtained based on the packet 3, where the packet 4 includes the in-situ flow detection information 1.

After receiving the packet 3, the SF performs corresponding processing on the packet 3. Then, the SF obtains the packet 4 based on the packet 3, and sends the packet 4 to the SFF. Specifically, during specific implementation of obtaining the packet 4 based on the packet 3 by the SF, for example, the SF may modify fields such as a source media access control (media access control, MAC) address or a destination MAC address in the packet 3, to obtain the packet 4. In this embodiment of this application, the packet 4 is an IPv4 packet, and the packet 4 includes the in-situ flow detection information 1.

S107: The SFF obtains a packet 5 based on the packet 4.

After receiving the packet 4, the SFF re-encapsulates the packet 4 by using the SRv6 protocol. When re-encapsulating the packet 4, the SFF adds the in-situ flow detection information 1 in the packet 4 to a packet re-encapsulated by using the SRv6 protocol, to obtain the packet 5. Specifically, the SFF adds the in-situ flow detection information 1 to a packet header re-encapsulated by using the SRv6 protocol, to obtain the packet 5.

S108: The SFF sends the packet 5 to the egress PE.

Because the packet 5 includes the in-situ flow detection information 1, both the egress PE and a node between the egress PE and the SFF can receive the packet 5 including the in-situ flow detection information 1.

It can be learned from the foregoing descriptions that the in-situ flow detection information 1 may be transmitted across the entire detection domain. Therefore, all nodes that receive the in-situ flow detection information 1 can perform an in-situ flow detection operation, so that an in-situ flow detection technology can still be used for performance detection of the detection domain in the case of two bearer protocols, namely, the SRv6 protocol and the IPv4 protocol, deployed in the detection domain.

For the method 100, in some embodiments, the detection domain shown in FIG. 2 may include a domain A and a domain B. A bearer protocol deployed in the domain A is the SRv6 protocol, and a bearer protocol deployed in the domain B is the IPv4 protocol. The domain A includes the ingress PE and the SFF, or the domain A includes the egress PE and the SFF, and the domain B includes the SFF and the SF.

FIG. 5a is a schematic diagram of a structure of a possible SRv6 packet.

The SRv6 packet shown in FIG. 5a includes the following fields: ETH, IPv6 basic header, SRH, and payload.

Details are as follows:
The ETH field carries a layer 2 Ethernet header. The ETH may carry a source MAC address, a destination MAC address, and a protocol type.

The IPv6 basic header is an IPv6 basic header. Fields specifically included in the IPv6 basic header are not described in detail herein.

The SRH field includes an SRH basic header, a segment list, and an option type length value (type length value, TLV). Specifically, the SRH basic header is an SRH basic extension header. Fields specifically included in the SRH basic header are not described in detail herein. The segment list carries a list of segment identifiers indicating a packet forwarding path. The option TLV may be used as an extended field. In this embodiment of this application, the in-situ flow detection information 1 may be carried in the option TLV.

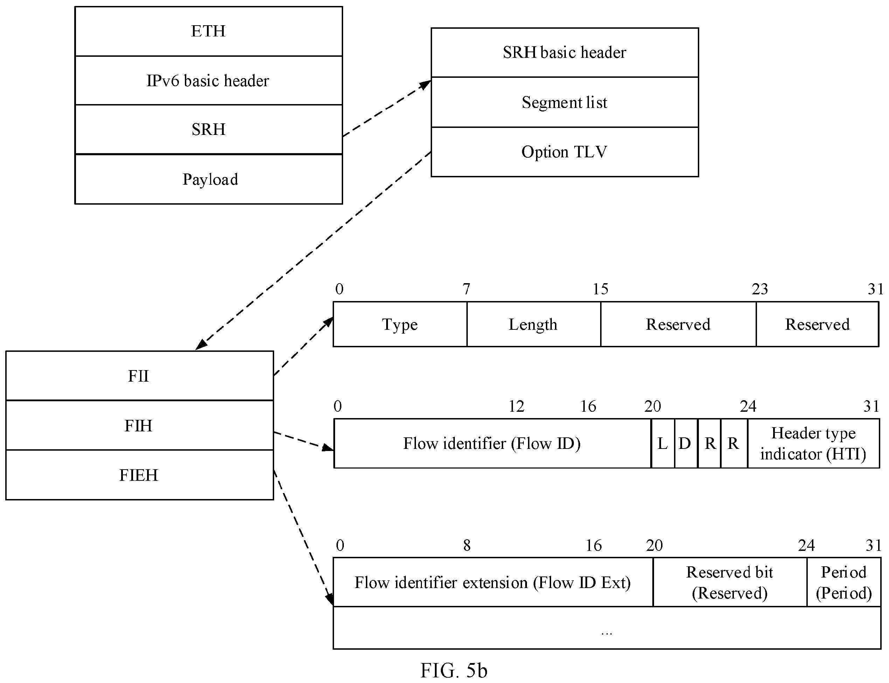

FIG. 5b shows a structure of an SRv6 packet in the case of the in-situ flow detection information 1 being iFIT in-situ flow detection information.

In FIG. 5b, a flow instruction indicator (flow instruction indicator, FII) field, a flow instruction header (flow instruction header, FIH) field, and a flow instruction extension header (flow instruction extension header, FIEH) field form the iFIT information. The following briefly describes the FII field, the FIH field, and the FIEH field.
1. The FII field is mainly for identifying that data of several bytes following the field is the iFIT information. For example, the FII field may include the following field information:
   a type field, for identifying an iFIT detection header;
   a length field, for identifying lengths of the FIH field and the FIEH field; and
   a reserved field, which is a reserved field.
2. The FIH field may also be referred to as an in-situ flow detection header or a flow detection header. The field mainly carries information related to iFIT detection. For example, the FIH field may include the following field information:
   a flow identifier (English: Flow ID), which is a globally unique identifier allocated to each piece of iFIT detection traffic;
   an L flag bit, namely, a packet loss (English: packet loss) detection color flag, where, for example, a value "1" of the L flag bit indicates that a packet loss is collected, and a value "0" of the L flag bit indicates that the packet loss is not collected;
   a D flag bit, namely, a delay (English: delay) measurement color flag, where, for example, a value "1" of the D flag bit indicates that a timestamp is collected, and a value "0" of the D flag bit indicates that the timestamp is not collected;
   a header type indicator (header type indicator, HTI), which marks a range of nodes that need to send an iFIT detection result and a detection content range, where, for example, different mark values may be for distinguishing whether to detect a path node capable of iFIT other than two end nodes, whether the FIEH field is valid, and the like; and
   an R flag bit, which may be used as a reserved flag bit.
3. The FIEH field may also be referred to as a flow extension detection header or an extension in-situ flow detection header. As an extension field, this field mainly carries other information related to iFIT detection. For example, the FIEH field may include the following field information:
   a flow identifier extension Flow ID Ext, for extending a bit width of a flow identifier;
   a V flag bit, for marking a reverse flow (English: reverse flow), where for example, a value "0" of the V flag bit indicates that a current flow is a forward flow, and a receive end may automatically create a reverse flow; and a value "1" of the V flag bit indicates that a current flow is a reverse flow, and the receive end no longer automatically creates a reverse flow, where the V flag bit is an optional field, which is not shown in FIG. 1; and
   a period (English: Period), where different values indicate different detection periods, and for example, the detection period may be 1s, 10s, 30s, 1 min, or 10 min.

FIG. 5c shows a structure of an SRv6 packet in the case of the in-situ flow detection information 1 being iOAM in-situ flow detection information.

As shown in FIG. 5c, the iOAM in-situ flow detection information includes an SRH-TLV-type field, an iOAM-type field, an iOAM HDR LEN field, an iOAM option and data space field, and a RESERVED field.

Details are as follows:
The SRH-TLV-type field is for identifying iOAM encapsulation, that is, identifying that data of several bytes following the field is the iOAM information.

The iOAM-type field indicates an iOAM type.

The iOAM HDR LEN field is for identifying a length of an iOAM header.

The iOAM option and data space field is an iOAM option and data field, and carries indication information indicating a node to perform a corresponding in-situ flow detection operation.

The RESERVED field is a reserved field.

FIG. 6a is a schematic diagram of a structure of a possible IPv4 packet.

In FIG. 6a, the IPv4 packet includes the following fields: ETH, IPv4 header, and payload. The in-situ flow detection information 1 may be located in the IPv4 header. In an example, the in-situ flow detection information 1 may be located in an options (options) field of the IPv4 header. Details are as follows:
The ETH field carries a layer 2 Ethernet header. The ETH may carry a source media access control (media access control, MAC) address, a destination MAC address, and a protocol type.

Fields in the IPv4 header are not described in detail herein.

In this embodiment of this application, the in-situ flow detection information 1 shown in FIG. 6a may be iFIT in-situ flow detection information or iOAM in-situ flow detection information.

For the iFIT in-situ flow detection information, refer to the descriptions of the iFIT in-situ flow detection information in FIG. 5b. Details are not described herein again.

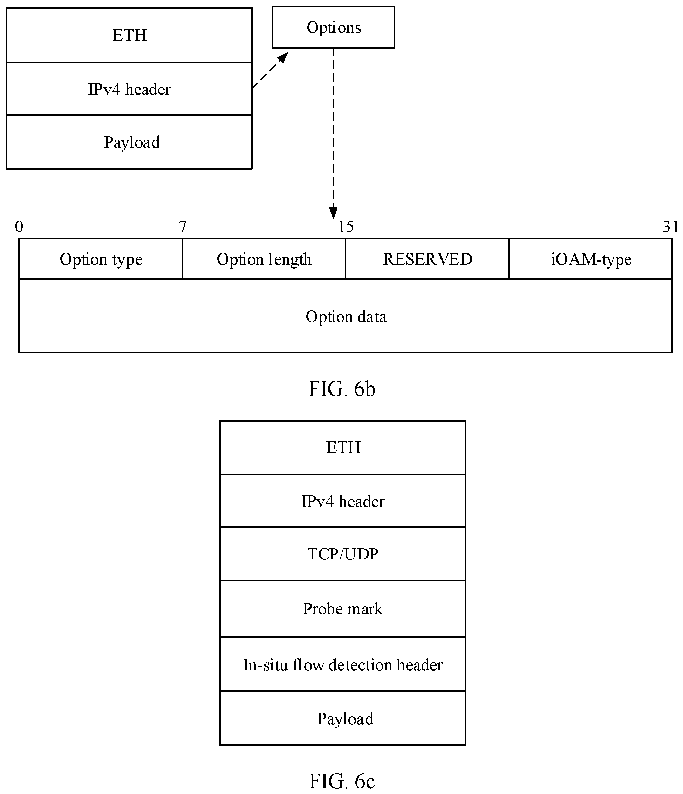

When the in-situ flow detection information 1 is the iOAM in-situ flow detection information, refer to FIG. 6b for understanding. FIG. 6b shows a structure of an IPv4 packet in the case of the in-situ flow detection information 1 being iOAM in-situ flow detection information.

As shown in FIG. 6b, the iOAM in-situ flow detection information may be located in an options field of an IPv4 header. Specifically, the iOAM in-situ flow detection information includes an option type field, an option length field, a RESERVED field, an iOAM-type field, and an option data field. Details are as follows:
The option type field indicates an option header of an iOAM encapsulation type.

The option length field indicates a length of an entire iOAM header.

The RESERVED is a reserved field.

The iOAM-type field indicates an iOAM type.

The option data field is an iOAM option and data field, and carries indication information indicating a node to perform a corresponding in-situ flow detection operation.

FIG. 6c is a schematic diagram of a structure of still another possible IPv4 packet.

In FIG. 6c, the IPv4 packet includes the following fields: ETH, IPv4 header, transmission control protocol (Transmission Control Protocol, TCP)/user datagram protocol (User Datagram Protocol, UDP), probe mark (probe mark), in-situ flow detection header, and payload.

The ETH, the IPv4 header, and the TCP/UDP are not described in detail herein.

The probe mark field indicates that data of following several bytes is in-situ flow detection data, and the probe mark field may include, for example, eight bytes.

When the in-situ flow detection information 1 is iFIT in-situ flow detection information, the probe mark field may correspond, for example, to the FII field shown in FIG. 5b, and the in-situ flow detection header may include, for example, the FIH field and the FIEH field shown in FIG. 5b. For the FII field, the FIH field, and the FIEH field, refer to the foregoing descriptions of FIG. 5b. Details are not described herein again.

When the in-situ flow detection information 1 is iOAM in-situ flow detection information, specific encapsulation forms of the probe mark field and the in-situ flow detection header are not specifically limited in this embodiment of this application. In an example, the probe mark field may correspond, for example, to the SRH-TLV-type field shown in FIG. 5c, and the in-situ flow detection header may include, for example, the iOAM-type field, the iOAM HDR LEN field, the iOAM option and data space field, and the RESERVED field shown in FIG. 5c.

The following describes the packet processing method provided in embodiments of this application with reference to the application scenario shown in FIG. 3.

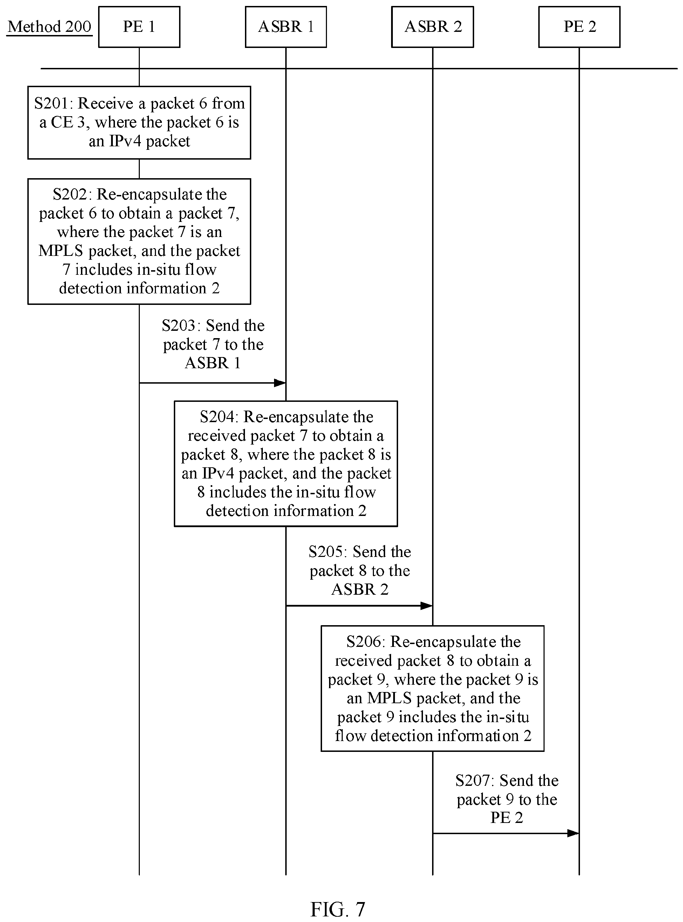

FIG. 7 is a signaling interworking diagram of an in-situ flow detection-based packet processing method according to an embodiment of this application. The method 200 shown in FIG. 7 may be, for example, implemented through the following S201 to S207.

S201: A PE 1 receives a packet 6 from a CE 3, where the packet 6 is an IPv4 packet.

S202: The PE 1 re-encapsulates the packet 6 into a packet 7, where the packet 7 is an MPLS packet, and the packet 7 includes in-situ flow detection information 2.

In this embodiment of this application, the packet 7 includes a public network label and a private network label of an L3VPN.

In this embodiment of this application, a detection domain includes a network between the PE 1 and a PE 2. When re-encapsulating the packet 6, the PE 1 serving as a head node of the detection domain adds the in-situ flow detection information 2 to a packet header, to obtain the packet 7. The in-situ flow detection information 2 may be iFIT in-situ flow detection information or iOAM in-situ flow detection information.

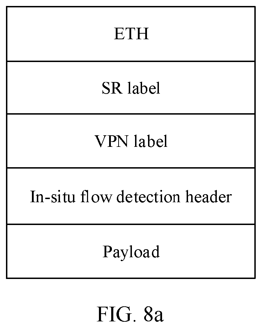

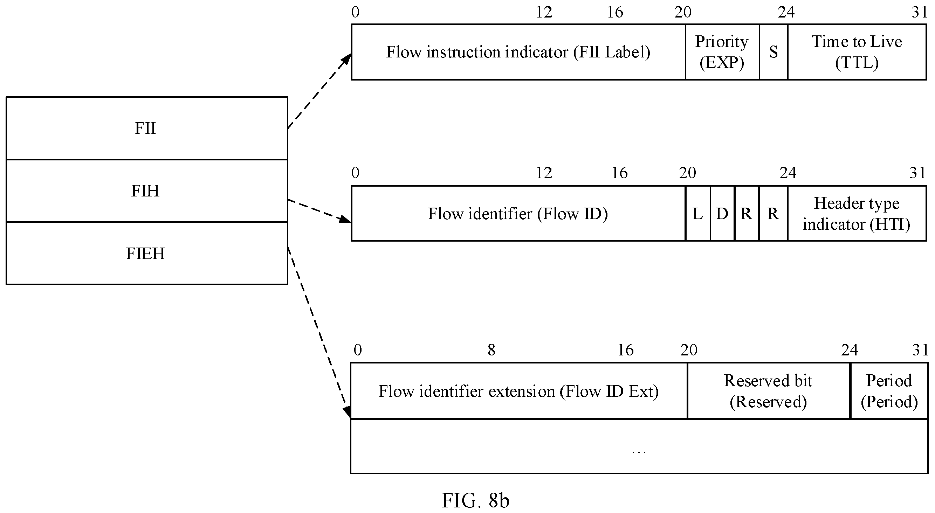

For a structure of the packet 7, refer to the following descriptions of FIG. 8a and FIG. 8b. Details are not described herein.

S203: The PE 1 sends the packet 7 to an ASBR 1.

S204: The ASBR 1 re-encapsulates the received packet 7 to obtain a packet 8, where the packet 8 is an IPv4 packet, and the packet 8 includes the in-situ flow detection information 2.

The packet 8 is a packet encapsulated by using the IPv4 protocol. When re-encapsulating the packet 7 to obtain the packet 8, the ASBR 1 does not simply remove the in-situ flow detection information 2 from the packet 7, but encapsulates the in-situ flow detection information 2 obtained from the packet 7 into the packet 8. Specifically, when re-encapsulating the packet 7, the ASBR 1 may add the in-situ flow detection information 2 to a packet header, to obtain the packet 8 including the in-situ flow detection information 2.

For a structure of the packet 8, refer to the foregoing descriptions of FIG. 6a to FIG. 6c. Details are not described herein again.

S205: The ASBR 1 sends the packet 8 to an ASBR 2.

S206: The ASBR 2 re-encapsulates the received packet 8 to obtain a packet 9, where the packet 9 is an MPLS packet, and the packet 9 includes the in-situ flow detection information 2.

The packet 9 is a packet encapsulated by using the MPLS protocol. When re-encapsulating the packet 8 to obtain the packet 9, the ASBR 2 does not simply remove the in-situ flow detection information 2 from the packet 8, but encapsulates the in-situ flow detection information 2 obtained from the packet 8 into the packet 9. Specifically, when re-encapsulating the packet 8, the ASBR 2 may add the in-situ flow detection information 2 to a packet header, to obtain the packet 9 including the in-situ flow detection information 2.

A structure of the packet 9 is the same as the structure of the packet 7. For details, refer to the following descriptions of FIG. 8a and FIG. 8b.

S207: The ASBR 2 sends the packet 9 to the PE 2.

Because the packet 7, the packet 8, and the packet 9 all carry the in-situ flow detection information 2, the in-situ flow detection information 2 may be transmitted across the entire detection domain. Therefore, all nodes that receive the in-situ flow detection information 2 can perform an in-situ flow detection operation, so that an in-situ flow detection technology can still be used for performance detection of the detection domain in the case of two bearer protocols, namely, the MPLS protocol and the IPv4 protocol, deployed in the detection domain.

It should be noted that, in the application scenario shown in FIG. 3,
for the method 200, in some embodiments, the network domain shown in FIG. 3 may include a domain C, a domain D, and a domain E. A bearer protocol deployed in the domain C is the MPLS protocol, a bearer protocol deployed in the domain D is the IPv4 protocol, and a bearer protocol deployed in the domain E is the MPLS protocol. The domain C includes the PE 1 and the ASBR 1, the domain D includes the ASBR 1 and the ASBR 2, and the domain E includes the ASBR 2 and the PE 2.

FIG. 8a is a schematic diagram of a structure of a possible MPLS packet.

The MPLS packet shown in FIG. 8a includes the following fields: ETH, SR label, VPN label, in-situ flow detection header, and payload. Details are as follows:

The ETH field carries a layer 2 Ethernet header. The ETH may carry a source MAC address, a destination MAC address, and a protocol type.

The SR label carries a public network label.

The VPN label carries a private network label.

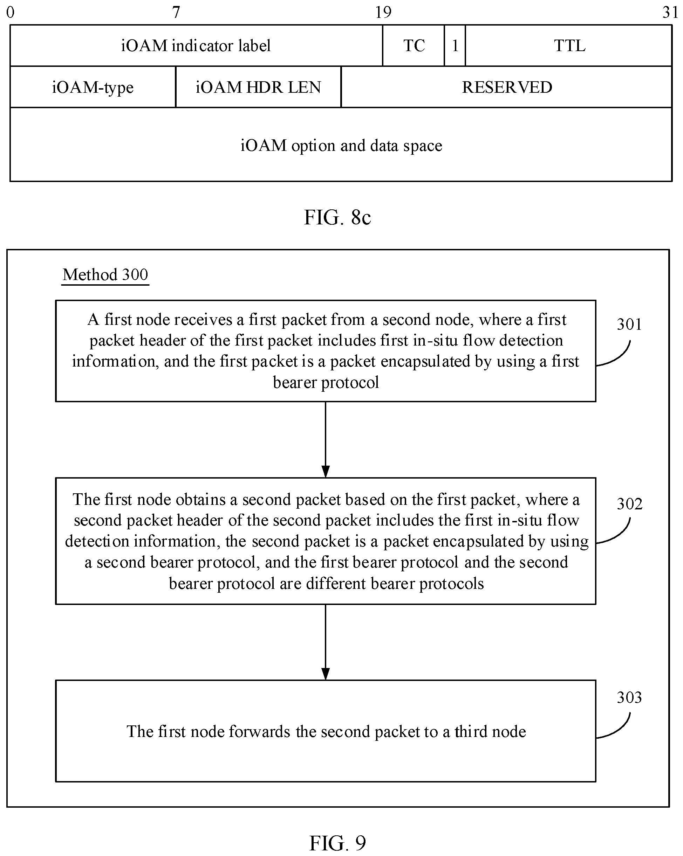

The in-situ flow detection header may carry iFIT in-situ flow detection information shown in FIG. 8b or iOAM in-situ flow detection information shown in FIG. 8c.

The iFIT in-situ flow detection information shown in FIG. 8b includes an FII field, an FIH field, and an FIEH field.

Details are as follows:
The FII field is mainly for identifying that data of several bytes following the field is the iFIT information. For example, the FII field may include the following field information:
a flow instruction indicator label (English: FII Label), where a default value may be configured to identify an iFIT detection flow;
a priority EXP flag bit, where the priority EXP flag bit may be determined based on some related information in an outer MPLS label header;
an S flag bit, for marking whether a label is at a stack bottom, where, for example, a value of 1 indicates that the label is at the stack bottom, and a value of 0 indicates that the label is not at the stack bottom; and
a time to live (time to live, TTL) flag bit, where the TTL flag bit may also be determined based on some related information in the outer MPLS label header.

For the FIH field and the FIEH field, refer to the foregoing descriptions of FIG. 5b. Details are not described herein again.

The iOAM in-situ flow detection information shown in FIG. 8c includes an iOAM indicator label (Indicator Label) field, an iOAM-type field, an iOAM HDR LEN field, an iOAM option and data space field, and a RESERVED field. Details are as follows:
The iOAM indicator label field is for identifying iOAM encapsulation, that is, identifying that data of several bytes following the field is the iOAM information.

The iOAM-type field indicates an iOAM type.

The iOAM HDR LEN field is for identifying a length of an iOAM header.

The iOAM option and data space field is an iOAM option and data field, and carries indication information indicating a node to perform a corresponding in-situ flow detection operation.

The RESERVED field is a reserved field.

An embodiment of this application further provides an in-situ flow detection-based packet processing method 300. FIG. 9 is a schematic flowchart of an in-situ flow detection-based packet processing method according to an embodiment of this application. The following describes the method with reference to FIG. 9. The method 300 shown in FIG. 9 may be, for example, implemented through the following S301 and S302.

S301: A first node receives a first packet from a second node, where a first packet header of the first packet includes first in-situ flow detection information, and the first packet is a packet encapsulated by using a first bearer protocol.

S302: The first node obtains a second packet based on the first packet, where a second packet header of the second packet includes the first in-situ flow detection information, the second packet is a packet encapsulated by using a second bearer protocol, and the first bearer protocol and the second bearer protocol are different bearer protocols.

S303: The first node forwards the second packet to a third node.

The method 300 may be used to implement the steps performed by the SFF in the method 100 mentioned in the foregoing embodiments, and the method 300 may be alternatively used to perform the steps performed by the ASBR 1 or the ASBR 2 in the method 200 mentioned in the foregoing embodiments.

In some embodiments, when the method 300 may be used to implement the steps performed by the SFF in the method 100 mentioned in the foregoing embodiments, the first node corresponds to the SFF shown in FIG. 2, the second node corresponds to the ingress PE shown in FIG. 2, the first packet corresponds to the packet 2 in the method 100, the first bearer protocol is the SRv6 protocol, and the first in-situ flow detection information is the in-situ flow detection information 1 in the method 100. The second packet corresponds to the packet 3 in the method 100, and the second bearer protocol is the IPv4 protocol. The third node is the SF in the method 100.

In some embodiments, when the method 300 may be used to implement the steps performed by the SFF in the method 100 mentioned in the foregoing embodiments, the first node corresponds to the SFF shown in FIG. 2, the second node corresponds to the SF shown in FIG. 2, the first packet corresponds to the packet 4 in the method 100, the first bearer protocol is the IPv4 protocol, and the first in-situ flow detection information is the in-situ flow detection information 1 in the method 100. The second packet corresponds to the packet 5 in the method 100, the second bearer protocol is the SRv6 protocol, and the third node corresponds to the egress PE shown in FIG. 2.

When the method 300 is used to implement the steps performed by the ASBR 1 in the method 200 mentioned in the foregoing embodiments, the first node corresponds to the ASBR 1 shown in FIG. 3, the second node corresponds to the PE 1 shown in FIG. 3, the first packet corresponds to the packet 7 in the method 200, the first bearer protocol is the MPLS protocol, and the first in-situ flow detection information is the in-situ flow detection information 2 in the method 200. The second packet corresponds to the packet 8 in the method 200, and the second bearer protocol is the IPv4 protocol. The third node is the ASBR 2 in the method 200.

When the method 300 is used to implement the steps performed by the ASBR 2 in the method 200 mentioned in the foregoing embodiments, the first node corresponds to the ASBR 2 shown in FIG. 3, the second node corresponds to the ASBR 1 shown in FIG. 3, the first packet corresponds to the packet 8 in the method 200, the first bearer protocol is the IPv4 protocol, and the first in-situ flow detection information is the in-situ flow detection information 2 in the method 200. The second packet corresponds to the packet 9 in the method 200, and the second bearer protocol is the MPLS protocol. The third node is the PE 2 in the method 200.

In an implementation, the first bearer protocol is the IPv4 protocol, the IPv6 protocol, the MPLS protocol, the VLAN protocol, the GRE protocol, the NSH protocol, or the SRv6 protocol. The second bearer protocol is the IPv4 protocol, the IPv6 protocol, the MPLS protocol, the VLAN protocol, the GRE protocol, the NSH protocol, or the SRv6 protocol.

In an implementation, the first in-situ flow detection information indicates a performance parameter for detecting a detection domain, the detection domain includes a first domain and a second domain, the second node belongs to the first domain, the third node belongs to the second domain, and the first node is a node that crosses the first domain and the second domain.

When the method 300 may be used to implement the steps performed by the SFF in the method 100 mentioned in the foregoing embodiments, the detection domain is the detection domain shown in FIG. 2, the first domain may include the ingress PE and the SFF, that is, correspond to the domain A mentioned above, and the second domain may include the SFF and the SF, that is, correspond to the domain B mentioned above. The first node corresponds to the SFF shown in FIG. 2, the second node corresponds to the ingress PE shown in FIG. 2, and the third node corresponds to the SF shown in FIG. 2. In this case, in some embodiments, the first node may be further configured to receive a third packet returned by the third node, where the third packet includes the first in-situ flow detection information, and the third packet is a packet encapsulated by using the second bearer protocol. The first node generates a fourth packet based on the third packet, where the fourth packet includes the first in-situ flow detection information, and the fourth packet is a packet encapsulated by using the first bearer protocol. The first node sends the first packet to a next-hop node. The third packet mentioned herein corresponds to the packet 4 in the method 100, the first in-situ flow detection information corresponds to the in-situ flow detection information 1 in the method 100, and the fourth packet corresponds to the packet 5 in the method 100. The first bearer protocol is the IPv4 protocol, and the second bearer protocol is the SRv6 protocol.

In an implementation, an SRv6 network is deployed in the first domain, an IPv4 network is deployed in the second domain, the first packet is an SRv6 packet carrying SFC information, and the second packet is an IPv4 packet carrying the SFC information. The first domain includes the ingress PE and the SFF shown in FIG. 2, that is, the first domain corresponds to the domain A mentioned above. The second domain includes the SFF and the SF shown in FIG. 2, that is, the second domain corresponds to the domain B mentioned above.

In an implementation, an IPv4 network is deployed in the first domain, an SRv6 network is deployed in the second domain, the first packet is an IPv4 packet carrying SFC information, and the second packet is an SRv6 packet carrying the SFC information. The first domain includes the SFF and the SF shown in FIG. 2, that is, the first domain corresponds to the domain B mentioned above. The second domain includes the SFF and the egress PE shown in FIG. 2, that is, the second domain corresponds to the domain A mentioned above.

In an implementation, when the method 300 may be used to implement the steps performed by the ASBR 1 in the method 200 mentioned in the foregoing embodiments, the detection domain is the detection domain shown in FIG. 3. An MPLS network is deployed in the first domain, an IPv4 network is deployed in the second domain, the first packet is an MPLS packet, and the second packet is an IPv4 packet. The first domain may include the PE 1 and the ASBR 1 shown in FIG. 3, that is, the first domain may correspond to the domain C mentioned above. The second domain may include the ASBR 1 and the ASBR 2 shown in FIG. 3, that is, the second domain may include the domain D mentioned above. In this case, the first packet may correspond to the packet 7 in the method 200, and the second packet may correspond to the packet 8 in the method 200.

In an implementation, a layer 3 virtual private network L3VPN is deployed in the first domain.

In an implementation, the detection domain further includes a third domain, the MPLS network is deployed in the third domain, and the third node is a node that crosses the second domain and the third domain. The third domain may include the ASBR 2 and the PE 2 shown in FIG. 3, that is, the third domain may correspond to the domain E mentioned above. In this case, the third node is the ASBR 2.

In an implementation, the L3VPN is deployed in the third domain.

In an implementation, the first domain is a first autonomous system, and the first node is an ASBR of the first autonomous system. The third domain is a second autonomous system, and the third node is an ASBR of the second autonomous system. That is, both the domain C and the domain D mentioned above are autonomous systems, the first node corresponds to the ASBR 1 shown in FIG. 3, and the third node corresponds to the ASBR 2 shown in FIG. 3.

In an implementation, when the method 300 may be used to implement the steps performed by the ASBR 2 in the method 200 mentioned in the foregoing embodiments, an IPv4 network is deployed in the first domain, an MPLS network is deployed in the second domain, the first packet is an IPv4 packet, and the second packet is an MPLS packet. In this case, the first domain may include the ASBR 1 and the ASBR 2 shown in FIG. 3, that is, the first domain corresponds to the domain D mentioned above. The second domain may include the ASBR 2 and the PE 2 shown in FIG. 3, that is, the second domain may correspond to the domain E mentioned above. In this case, the first node may correspond to the ASBR 2 in the method 200, the first packet may correspond to the packet 8 in the method 200, and the second packet may correspond to the packet 9 in the method 200.

In an implementation, an L3VPN is deployed in the second domain.

In an implementation, the first in-situ flow detection information includes: iFIT in-situ flow detection information or iOAM in-situ flow detection information.

For specific implementation of the method 300, refer to related descriptions of the method 100 and the method 200 in the foregoing embodiments. Details are not described herein again.

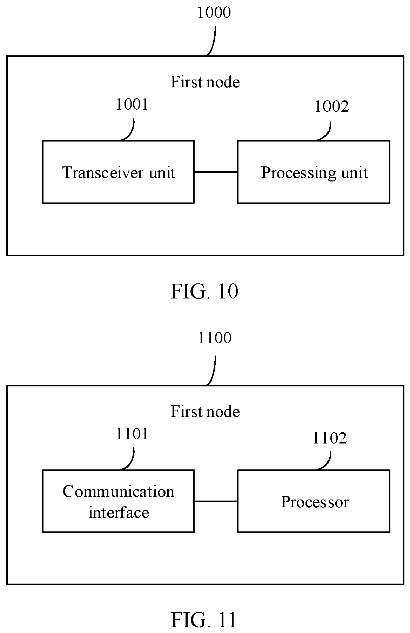

In addition, an embodiment of this application further provides a first node 1000. FIG. 10 is a schematic diagram of a structure of a first node according to an embodiment of this application. The first node 1000 includes a transceiver unit 1001 and a processing unit 1002. The transceiver unit 1001 is configured to perform sending and receiving operations performed by the SFF in the embodiment corresponding to the method 100. The processing unit 1002 is configured to perform an operation other than the sending and receiving operations performed by the SFF in the embodiment corresponding to the method 100. Alternatively, the transceiver unit 1001 is configured to perform sending and receiving operations performed by the ASBR 1 in the embodiment corresponding to the method 200. The processing unit 1002 is configured to perform an operation other than the sending and receiving operations performed by the ASBR 1 in the embodiment corresponding to the method 200. Alternatively, the transceiver unit 1001 is configured to perform sending and receiving operations performed by the ASBR 2 in the embodiment corresponding to the method 200. The processing unit 1002 is configured to perform an operation other than the sending and receiving operations performed by the ASBR 2 in the embodiment corresponding to the method 200. For example, if the first node 1000 is the SFF in the method 100, the transceiver unit 1001 is configured to perform the step of receiving the packet 2 from the ingress PE and the step of sending the packet 3 to the SF, and the processing unit 1002 is configured to perform the step of obtaining the packet 3 based on the packet 2.

In addition, an embodiment of this application further provides a first node 1100. FIG. 11 is a schematic diagram of a structure of a first node according to an embodiment of this application. The first node 1100 includes a communication interface 1101 and a processor 1102 connected to the communication interface 1101. The communication interface 1101 is configured to perform sending and receiving operations performed by the SFF in the embodiment corresponding to the method 100. The processor 1102 is configured to perform an operation other than the sending and receiving operations performed by the SFF in the embodiment corresponding to the method 100. Alternatively, the communication interface 1101 is configured to perform sending and receiving operations performed by the ASBR 1 in the embodiment corresponding to the method 200. The processor 1102 is configured to perform an operation other than the sending and receiving operations performed by the ASBR 1 in the embodiment corresponding to the method 200. Alternatively, the communication interface 1101 is configured to perform sending and receiving operations performed by the ASBR 2 in the embodiment corresponding to the method 200. The processor 1102 is configured to perform an operation other than the sending and receiving operations performed by the ASBR 2 in the embodiment corresponding to the method 200. For example, if the first node 1100 is the SFF in the method 100, the communication interface 1101 is configured to perform the step of receiving the packet 2 from the ingress PE and the step of sending the packet 3 to the SF, and the processor 1102 is configured to perform the step of obtaining the packet 3 based on the packet 2.

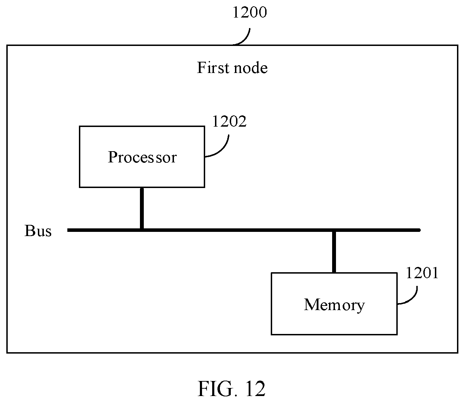

In addition, an embodiment of this application further provides a first node 1200. FIG. 12 is a schematic diagram of a structure of a first node according to an embodiment of this application. The first node 1200 includes a memory 1201 and a processor 1202. The memory 1201 is configured to store program code, and the processor 1202 is configured to run instructions in the program code, to enable the first node 1200 to perform the steps performed by the SFF in the embodiment corresponding to the method 100, enable the first node 1200 to perform the steps performed by the ASBR 1 in the embodiment corresponding to the method 200, or enable the first node 1200 to perform the steps performed by the ASBR 2 in the embodiment corresponding to the method 200.

In addition, an embodiment of this application further provides a computer-readable storage medium. The computer-readable storage medium stores instructions. When the instructions are run on a computer, the computer is enabled to perform the steps performed by the SFF in the embodiment corresponding to the method 100, perform the steps performed by the ASBR 1 in the embodiment corresponding to the method 200, or perform the steps performed by the ASBR 2 in the embodiment corresponding to the method 200.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way is interchangeable in appropriate circumstances, so that embodiments described herein can be implemented in other orders than the content illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software service unit.

When the integrated unit is implemented in the form of the software service unit and sold or used as an independent product, the integrated unit may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The storage medium includes various media that can store program code, such as a USB flash drive, a removable hard disk, a read-only memory (ROM, Read-Only Memory), a random access memory (RAM, Random Access Memory), a magnetic disk, or an optical disc.

A person skilled in the art should be aware that in the foregoing one or more examples, services described in the present invention may be implemented by hardware, software, firmware, or any combination thereof. When the services are implemented by software, the services may be stored in a computer-readable medium or transmitted as one or more instructions or code in the computer-readable medium. The computer-readable medium includes a computer storage medium and a communication medium. The communication medium includes any medium that facilitates transmission of a computer program from one place to another. The storage medium may be any available medium accessible to a general-purpose or dedicated computer.

The objectives, technical solutions, and beneficial effects of the present invention have been further described in detail in the foregoing specific implementations. It should be understood that the foregoing descriptions are merely specific implementations of the present invention.

## Claims

1. An in-situ flow detection-based packet processing method, comprising:
receiving (S301), by a first node, a first packet from a second node, wherein a first packet header of the first packet comprises first in-situ flow detection information, and the first packet is a packet encapsulated by using a first bearer protocol;
obtaining (S302), by the first node, a second packet by re-encapsulating the first packet, wherein a second packet header of the second packet comprises the first in-situ flow detection information, the second packet is a packet encapsulated by using a second bearer protocol, and the first bearer protocol and the second bearer protocol are different bearer protocols; and
forwarding (S303), by the first node, the second packet to a third node.

2. The method according to claim 1, wherein
the first bearer protocol is an internet protocol version 4 IPv4 protocol, an internet protocol version 6 IPv6 protocol, a multi-protocol label switching MPLS protocol, a virtual local area network VLAN protocol, a generic routing encapsulation GRE protocol, a network service header NSH protocol, or a segment routing over internet protocol version 6 SRv6 protocol; and
the second bearer protocol is the IPv4 protocol, the IPv6 protocol, the MPLS protocol, the VLAN protocol, the GRE protocol, the NSH protocol, or the SRv6 protocol.

3. The method according to claim 1 or 2, wherein
the first in-situ flow detection information indicates a performance parameter for detecting a detection domain, the detection domain comprises a first domain and a second domain, the second node belongs to the first domain, the third node belongs to the second domain, and the first node is a node that crosses the first domain and the second domain.

4. The method according to any one of claims 1 to 3, wherein the first node is a service function proxy SF proxy, and the third node is a service function SF device.

5. The method according to claim 4, further comprising:
receiving, by the first node, a third packet returned by the third node, wherein the third packet comprises the first in-situ flow detection information, and the third packet is a packet encapsulated by using the second bearer protocol;
generating, by the first node, a fourth packet based on the third packet, wherein the fourth packet comprises the first in-situ flow detection information, and the fourth packet is a packet encapsulated by using the first bearer protocol; and
sending, by the first node, the first packet to a next-hop node.

6. The method according to any one of claims 3 to 5, wherein an SRv6 network is deployed in the first domain, an IPv4 network is deployed in the second domain, the first packet is an SRv6 packet, and the second packet is an IPv4 packet.

7. The method according to claim 3 or 4, wherein an IPv4 network is deployed in the first domain, an SRv6 network is deployed in the second domain, the first packet is an IPv4 packet, and the second packet is an SRv6 packet.

8. The method according to claim 3, wherein an MPLS network is deployed in the first domain, an IPv4 network is deployed in the second domain, the first packet is an MPLS packet, and the second packet is an IPv4 packet.

9. The method according to claim 8, wherein the first domain carries a layer 3 virtual private network L3VPN service.

10. The method according to claim 8 or 9, wherein the detection domain further comprises a third domain, the MPLS network is deployed in the third domain, and the third node is a node that crosses the second domain and the third domain.

11. The method according to claim 10, wherein the third domain carries the L3VPN service.

12. The method according to claim 10 or 11, wherein
the first domain is a first autonomous system AS, and the first node is an autonomous system boundary router ASBR of the first AS; and
the third domain is a second AS, and the third node is an ASBR of the second AS.

13. The method according to claim 3, wherein an IPv4 network is deployed in the first domain, an MPLS network is deployed in the second domain, the first packet is an IPv4 packet, and the second packet is an MPLS packet.

14. An in-situ flow detection-based packet processing apparatus, wherein the apparatus is used in a first node (1000), and comprises:
a receiving unit (1001), configured to receive a first packet from a second node, wherein a first packet header of the first packet comprises first in-situ flow detection information, and the first packet is a packet encapsulated by using a first bearer protocol;
a processing unit (1002), configured to obtain a second packet by re-encapsulating the first packet, wherein a second packet header of the second packet comprises the first in-situ flow detection information, the second packet is a packet encapsulated by using a second bearer protocol, and the first bearer protocol and the second bearer protocol are different bearer protocols; and
a sending unit (1001), configured to forward the second packet to a third node.

15. A computer program product, comprising a computer program, wherein when the computer program runs on a processor, the method according to any one of claims 1 to 13 is implemented.

## Patentansprüche

1. Auf In-situ-Flussdetektion basierendes Paketverarbeitungsverfahren, umfassend:
Empfangen (S301) eines ersten Pakets von einem zweiten Knoten durch einen ersten Knoten, wobei ein erster Paketheader des ersten Pakets erste In-situ-Flussdetektionsinformationen umfasst und das erste Paket ein unter Verwendung eines ersten Trägerprotokolls eingekapseltes Paket ist;
Erlangen (S302) eines zweiten Pakets durch den ersten Knoten durch erneutes Einkapseln des ersten Pakets, wobei ein zweiter Paketheader des zweiten Pakets die ersten In-situ-Flussdetektionsinformationen umfasst, das zweite Paket ein unter Verwendung eines zweiten Trägerprotokolls eingekapseltes Paket ist und das erste Trägerprotokoll und das zweite Trägerprotokoll unterschiedliche Trägerprotokolle sind; und
Weiterleiten (S303) des zweiten Pakets durch den ersten Knoten an einen dritten Knoten.

2. Verfahren nach Anspruch 1, wobei
das erste Trägerprotokoll ist ein Internetprotokollversion-4-IPv4-Protokoll, ein Internetprotokollversion-6-IPv6-Protokoll, ein Multiprotocol-Label-Switching-MPLS-Protokoll, ein virtuelles lokales Netzwerk-VLAN-Protokoll, ein Generic-Routing-Encapsulation-GRE-Protokoll, ein Netzwerkdienst-Header-NSH-Protokoll oder ein Segment-Routing-over-Internet Protocol Version 6 SRv6-Protokoll ist; und
das zweite Trägerprotokoll das IPv4-Protokoll, das IPv6-Protokoll, das MPLS-Protokoll, das VLAN-Protokoll, das GRE-Protokoll, das NSH-Protokoll oder das SRv6-Protokoll ist.

3. Verfahren nach Anspruch 1 oder 2, wobei
die ersten In-situ-Flussdetektionsinformationen einen Leistungsparameter zum Detektieren einer Detektionsdomäne angeben, wobei die Detektionsdomäne eine erste Domäne und eine zweite Domäne umfasst, der zweite Knoten zur ersten Domäne gehört, der dritte Knoten zur zweiten Domäne gehört und der erste Knoten ein Knoten ist, der die erste Domäne und die zweite Domäne kreuzt.

4. Verfahren nach einem der Ansprüche 1 bis 3, wobei der erste Knoten ein Servicefunktions-Proxy (SF-Proxy) und der dritte Knoten eine Servicefunktions-SF-Vorrichtung ist.

5. Verfahren nach Anspruch 4, ferner umfassend:
Empfangen eines vom dritten Knoten zurückgegebenen dritten Pakets durch den ersten Knoten, wobei das dritte Paket die ersten In-situ-Flusserdetektionsinformationen umfasst und das dritte Paket ein unter Verwendung des zweiten Trägerprotokolls gekapseltes Paket ist;
Erzeugen eines vierten Pakets durch den ersten Knoten basierend auf dem dritten Paket, wobei das vierte Paket die ersten In-situ-Flusserkennungsinformationen umfasst und das vierte Paket ein unter Verwendung des ersten Trägerprotokolls eingekapseltes Paket ist; und
Senden des ersten Pakets durch den ersten Knoten an einen Next-Hop-Knoten.

6. Verfahren nach einem der Ansprüche 3 bis 5, wobei in der ersten Domäne ein SRv6-Netzwerk eingesetzt wird, in der zweiten Domäne ein IPv4-Netzwerk eingesetzt wird, das erste Paket ein SRv6-Paket ist und das zweite Paket ein IPv4-Paket ist.

7. Verfahren nach Anspruch 3 oder 4, wobei in der ersten Domäne ein IPv4-Netzwerk eingesetzt wird, in der zweiten Domäne ein SRv6-Netzwerk eingesetzt wird, das erste Paket ein IPv4-Paket ist und das zweite Paket ein SRv6-Paket ist.

8. Verfahren nach Anspruch 3, wobei in der ersten Domäne ein MPLS-Netzwerk eingesetzt wird, in der zweiten Domäne ein IPv4-Netzwerk eingesetzt wird, das erste Paket ein MPLS-Paket ist und das zweite Paket ein IPv4-Paket ist.

9. Verfahren nach Anspruch 8, wobei die erste Domäne einen virtuellen privaten Netzwerkdienst (L3VPN) der Schicht 3 überträgt.

10. Verfahren nach Anspruch 8 oder 9, wobei die Detektionsdomäne außerdem eine dritte Domäne umfasst, das MPLS-Netzwerk in der dritten Domäne eingesetzt wird und der dritte Knoten ein Knoten ist, der die zweite Domäne und die dritte Domäne kreuzt.

11. Verfahren nach Anspruch 10, wobei die dritte Domäne den L3VPN-Dienst überträgt.

12. Verfahren nach Anspruch 10 oder 11, wobei
die erste Domäne ein erstes autonomes System, AS, und der erste Knoten ist ein autonomer Systemgrenzrouter, ASBR, des ersten AS ist; und
die dritte Domäne ein zweites AS und der dritte Knoten ist ein ASBR des zweiten AS ist.

13. Verfahren nach Anspruch 3, wobei in der ersten Domäne ein IPv4-Netzwerk eingesetzt wird, in der zweiten Domäne ein MPLS-Netzwerk eingesetzt wird, das erste Paket ein IPv4-Paket ist und das zweite Paket ein MPLS-Paket ist.

14. In-situ-Flussdetektion basierende Paketverarbeitungsvorrichtung, wobei die Vorrichtung in einem ersten Knoten (1000) verwendet wird und Folgendes umfasst:
eine Empfangseinheit (1001), die dazu konfiguriert ist, ein erstes Paket von einem zweiten Knoten zu empfangen, wobei ein erster Paketheader des ersten Pakets erste In-situ-Flussdetektionsinformationen umfasst und das erste Paket ein unter Verwendung eines ersten Trägerprotokolls eingekapseltes Paket ist;
eine Verarbeitungseinheit (1002), die dazu konfiguriert ist, ein zweites Paket durch erneutes Einkapseln des ersten Pakets zu erhalten, wobei ein zweiter Paketheader des zweiten Pakets die ersten In-situ-Flussdetektionsinformationen umfasst, das zweite Paket ein unter Verwendung eines zweiten Trägerprotokolls eingekapseltes Paket ist und das erste Trägerprotokoll und das zweite Trägerprotokoll unterschiedliche Trägerprotokolle sind; und
eine Sendeeinheit (1001), die dazu konfiguriert ist, das zweite Paket an einen dritten Knoten weiterzuleiten.

15. Computerprogrammprodukt, umfassend ein Computerprogramm, wobei, wenn das Computerprogramm auf einem Prozessor ausgeführt wird, das Verfahren gemäß einem der Ansprüche 1 bis 13 implementiert wird.

## Revendications

1. Procédé de traitement de paquets sur la base d'une détection de flux in situ, comprenant :
la réception (S301), par un premier nœud, d'un premier paquet provenant d'un deuxième nœud, dans lequel un premier en-tête de paquet du premier paquet comprend des premières informations de détection de flux in situ, et le premier paquet est un paquet encapsulé à l'aide d'un premier protocole de support ;
l'obtention (S302), par le premier nœud, d'un deuxième paquet en réencapsulant le premier paquet, dans lequel un second en-tête de paquet du deuxième paquet comprend les premières informations de détection de flux in situ, le deuxième paquet est un paquet encapsulé à l'aide d'un second protocole de support, et le premier protocole de support et le second protocole de support sont des protocoles de support différents ; et
la transmission (S303), par le premier nœud, du deuxième paquet à un troisième nœud.

2. Procédé selon la revendication 1, dans lequel
le premier protocole de support est un protocole Internet version 4, protocole IPv4, un protocole Internet version 6, protocole IPv6, un protocole de commutation d'étiquettes multiprotocole, MPLS, un protocole de réseau local virtuel, VLAN, un protocole d'encapsulation de routage générique, GRE, un protocole d'en-tête de service réseau, NSH, ou un protocole de routage de segment sur protocole Internet version 6, protocole SRv6 ; et
le second protocole de support est le protocole IPv4, le protocole IPv6, le protocole MPLS, le protocole VLAN, le protocole GRE, le protocole NSH ou le protocole SRv6.

3. Procédé selon la revendication 1 ou 2, dans lequel
les premières informations de détection de flux in situ indiquent un paramètre de performance pour détecter un domaine de détection, le domaine de détection comprend un premier domaine et un deuxième domaine, le deuxième nœud appartient au premier domaine, le troisième nœud appartient au deuxième domaine, et le premier nœud est un nœud qui traverse le premier domaine et le deuxième domaine.

4. Procédé selon l'une quelconque des revendications 1 à 3, dans lequel le premier nœud est un proxy de fonction de service, proxy SF, et le troisième nœud est un dispositif de fonction de service SF.

5. Procédé selon la revendication 4, comprenant également :
la réception, par le premier nœud, d'un troisième paquet renvoyé par le troisième nœud, dans lequel le troisième paquet comprend les premières informations de détection de flux in situ, et le troisième paquet est un paquet encapsulé à l'aide du second protocole de support ;
la génération, par le premier nœud, d'un quatrième paquet sur la base du troisième paquet, dans lequel le quatrième paquet comprend les premières informations de détection de flux in situ, et le quatrième paquet est un paquet encapsulé à l'aide du premier protocole de support ; et
l'envoi, par le premier nœud, du premier paquet à un nœud de saut suivant.

6. Procédé selon l'une quelconque des revendications 3 à 5, dans lequel un réseau SRv6 est déployé dans le premier domaine, un réseau IPv4 est déployé dans le deuxième domaine, le premier paquet est un paquet SRv6 et le deuxième paquet est un paquet IPv4.

7. Procédé selon la revendication 3 ou 4, dans lequel un réseau IPv4 est déployé dans le premier domaine, un réseau SRv6 est déployé dans le deuxième domaine, le premier paquet est un paquet IPv4 et le deuxième paquet est un paquet SRv6.

8. Procédé selon la revendication 3, dans lequel un réseau MPLS est déployé dans le premier domaine, un réseau IPv4 est déployé dans le deuxième domaine, le premier paquet est un paquet MPLS et le deuxième paquet est un paquet IPv4.

9. Procédé selon la revendication 8, dans lequel le premier domaine transporte un service de réseau privé virtuel de couche 3 L3VPN.

10. Procédé selon la revendication 8 ou 9, dans lequel le domaine de détection comprend également un troisième domaine, le réseau MPLS est déployé dans le troisième domaine, et le troisième nœud est un nœud qui traverse le deuxième domaine et le troisième domaine.

11. Procédé selon la revendication 10, dans lequel le troisième domaine transporte le service L3VPN.

12. Procédé selon la revendication 10 ou 11, dans lequel
le premier domaine est un premier système autonome AS, et le premier nœud est un routeur de frontière de système autonome ASBR du premier AS ; et
le troisième domaine est un second AS, et le troisième nœud est un ASBR du second AS.

13. Procédé selon la revendication 3, dans lequel un réseau IPv4 est déployé dans le premier domaine, un réseau MPLS est déployé dans le deuxième domaine, le premier paquet est un paquet IPv4 et le deuxième paquet est un paquet MPLS.

14. Appareil de traitement de paquets sur la base d'une détection de flux in situ, dans lequel l'appareil est utilisé dans un premier nœud (1000) et comprend :
une unité de réception (1001), configuré pour recevoir un premier paquet provenant d'un deuxième nœud, dans lequel un premier en-tête de paquet du premier paquet comprend des premières informations de détection de flux in situ, et le premier paquet est un paquet encapsulé à l'aide d'un premier protocole de support ;
une unité de traitement (1002), configurée pour obtenir un deuxième paquet en réencapsulant le premier paquet, dans lequel un second en-tête de paquet du deuxième paquet comprend les premières informations de détection de flux in situ, le deuxième paquet est un paquet encapsulé à l'aide d'un second protocole de support, et le premier protocole de support et le second protocole de support sont des protocoles de support différents ; et
une unité d'envoi (1001), configurée pour transmettre le deuxième paquet à un troisième nœud.

15. Produit de programme informatique, comprenant un programme informatique, dans lequel lorsque le programme informatique s'exécute sur un processeur, le procédé selon l'une quelconque des revendications 1 à 13 est mis en œuvre.
